# EUROPEAN PATENT SPECIFICATION

(11) **EP 4 053 765 B1**
(45) Date of publication and mention of the grant of the patent: **09.07.2025**
(21) Application number: 22158847.8
(22) Date of filing: 25.02.2022
(51) Int. Cl.: G06Q 10/06

(54) **LEARNING APPARATUS, EVALUATION APPARATUS, EVALUATION SYSTEM, LEARNING METHOD, LEARNING PROGRAM, EVALUATION METHOD, AND EVALUATION PROGRAM**
LERNVORRICHTUNG, AUSWERTUNGSVORRICHTUNG, AUSWERTUNGSSYSTEM, LERNVERFAHREN, LERNPROGRAMM, AUSWERTUNGSVERFAHREN UND AUSWERTUNGSPROGRAMM
APPAREIL D'APPRENTISSAGE, APPAREIL D'ÉVALUATION, SYSTÈME D'ÉVALUATION, PROCÉDÉ D'APPRENTISSAGE, PROGRAMME D'APPRENTISSAGE, PROCÉDÉ D'ÉVALUATION, ET PROGRAMME D'ÉVALUATION

(30) Priority: 05.03.2021 JP 2021035789
(43) Date of publication of application: 07.09.2022
(73) Proprietor: Yokogawa Electric Corporation, Musashino-shi, Tokyo 180-8750 (JP)
(72) Inventor: KANOKOGI, Hiroaki, Musashino-shi, Tokyo, 180-8750 (JP); GOTOU, Hirotsugu, Musashino-shi, Tokyo, 180-8750 (JP); FURUKAWA, Yota, Musashino-shi, Tokyo, 180-8750 (JP); UOMORI, Yoshio, Musashino-shi, Tokyo, 180-8750 (JP); KATSUKI, Masato, Musashino-shi, Tokyo, 180-8750 (JP); SATO, Keiji, Musashino-shi, Tokyo, 180-8750 (JP); SAITO, Fumihiro, Musashino-shi, Tokyo, 180-8750 (JP); TAYA, Eiji, Musashino-shi, Tokyo, 180-8750 (JP); MAKI, Tomotaka, Musashino-shi, Tokyo, 180-8750 (JP); INOMATA, Akifumi, Musashino-shi, Tokyo, 180-8750 (JP)
(74) Representative: Hoffmann Eitle

(56) References cited:
- JP-A- 2020 181 333
- US-A1- 2006 149 407
- US-A1- 2018 136 633
- GERHARD GREEFF ET AL: "Practical E-Manufacturing and Supply Chain Management", 18 October 2004, NEWNES, ISBN: 9780750662727, XP040425987

## Description

### BACKGROUND

### 1. TECHNICAL FIELD

The present invention relates to a learning apparatus, an evaluation apparatus, an evaluation system, a learning method, a learning program, an evaluation method, and an evaluation program.

### 2. RELATED ART

In the Patent Document 1, "a manufacturing process analyzing method for identifying an inhibiting factor causing a variation of product performance and for stabilizing the product performance" is described.

US 2018/136633 A1 discloses a method for verifying and authenticating additive manufactured products utilizing extraterrestrial communication including generating a product geometry file, recording to a distributed transaction register stored on a server network having a plurality of node servers a first transaction reflecting the product geometry file, the first transaction having a first output associated with the first transaction and including a blockchain address, transmitting the first output between a terrestrial transceiver that is communicatively connected to the server network and an extraterrestrial transceiver that is communicatively connected to the terrestrial transceiver, and printing, with a 3D additive printer, a product that utilizes the product geometry file.

US 2006/149407 A1 provides quality management and intelligent manufacturing with labels and smart tags in event-based product manufacturing. Some of the disclosed embodiments include a system, method, and computer-readable media for storing, during a process, data associated with a material. Also disclosed are a method of collecting, storing, and reporting machine productivity, waste, and delay information on an event basis in a manufacturing system, a method of capturing and storing material history, a method of automating tracking of positions of components used in a process and correlating portions of a component with production problems, an improved inventory management system, and a method of tracking and recording actions of specific operators of a process performed by a machine. The embodiments are operable in an intelligent manufacturing system including a process for converting raw materials to a product, a process control system including one or more sensors capable of generating an alarm in response to an event that results in one of waste, machine delay, or decrease product quality, a data logger associated with the process control system for obtaining event parameters associated with the event, a database on a server for recording event parameters obtained by the data logger, and a reporting system cooperatively associated with the database for reporting productivity parameters regarding the process derived at least in part from the event parameters.

Gerhard Greeff ET AL: "Practical E-Manufacturing and Supply Chain Management", 18 October 2004 (2004-10-18), Newnes, ISBN: 9780750662727, relates to an elementary understanding of business and manufacturing operations processes.

JP 2020181333 A relates to a creation method, etc., for a learning model by which an examination with suitable quality sensitivity is made possible. The creation method for the learning model includes: acquiring factor information from which a delivery destination determines a defect, with respect to a product which is determined as a non-defective quality by the learning model which outputs propriety information in a case where a product image is inputted; and performing re-learning of the learning model based on the acquired factor information.

### Prior Art Documents

### Patent Document

Patent Document 1: Japanese Patent Application Publication No. 2016-177794

### GENERAL DISCLOSURE

In a first aspect of the present invention, a learning apparatus is provided. The learning apparatus includes a correspondence receiving unit for receiving a correspondence between each produced object of a target process which is targeted and a quality evaluation of each downstream produced object produced in a downstream process by using each produced object of the target process. The learning apparatus includes a learning processing unit for generating, through learning, an estimation model for estimating a quality evaluation of the downstream produced object from at least one production parameter, by using the at least one production parameter about the production of each produced object of the target process and the quality evaluation of each downstream produced object produced by using each produced object of the target process. The learning apparatus includes a calculating unit for calculating a model evaluation based on at least one of certainty or complexity of the estimation model. The learning apparatus includes a model evaluation sending unit for sending the model evaluation calculated by the calculating unit, to an evaluation apparatus for evaluating at least one upstream process by using a model evaluation about each of the at least one upstream process which is upstream of the downstream process.

The learning apparatus includes an improvement request receiving unit for receiving an improvement request message which is sent by the evaluation apparatus in response to determining that the target process should be improved based on the model evaluation about each of the at least one upstream process.

The learning apparatus includes a parameter selecting unit for selecting a production parameter to be adjusted among the at least one production parameter in the target process, in response to a reception of the improvement request message.

The learning apparatus may include a quality evaluation estimating unit for estimating a quality evaluation of the downstream produced object produced in the downstream process by using each produced object of the target process in a case of adjusting a production parameter selected by the parameter selecting unit.

**In** a second aspect of the present invention, an evaluation apparatus is provided. The evaluation apparatus includes a model evaluation receiving unit for receiving a model evaluation which is based on at least one of certainty or complexity of an estimation model, from the learning apparatus for generating, for each of at least one upstream process, through learning, the estimation model for estimating a quality evaluation of a downstream produced object from at least one production parameter, by using a quality evaluation of each downstream produced object produced by using the at least one production parameter about the production of each upstream produced object according to the upstream process, and each upstream produced object of the upstream process. The evaluation apparatus includes a process evaluation unit for evaluating the at least one upstream process based on the model evaluation about each of the at least one upstream process.

The process evaluation unit may determine to improve an upstream process, among the at least one upstream process, which is given a model evaluation that is based on the estimation model whose certainty is greater than a standard value or whose complexity is less than a standard value.

The evaluation apparatus may include a message output unit for outputting an improvement request message for the upstream process determined to be improved.

The evaluation apparatus may include an association acquiring unit for acquiring, for each process of the at least one upstream process, an association between each produced object supplied from a process on the upstream side and each produced object of the process which is supplied to the downstream side. The evaluation apparatus may include a correspondence generating unit for generating a correspondence between each produced object of the at least one upstream process and the quality evaluation of each downstream produced object by using each association acquired by the association acquiring unit. The evaluation apparatus may include a correspondence sending unit for sending the correspondence to the learning apparatus.

The evaluation apparatus may include a start determination unit for determining whether to start an evaluation of the at least one upstream process by the process evaluation unit, based on the quality evaluation of at least one downstream produced object.

In the third aspect of the present invention, an evaluation system is provided. The evaluation system includes a learning apparatus, wherein the learning apparatus includes at least one learning apparatus having each of at least one upstream process as a target process. The evaluation system includes an evaluation apparatus.

In the fourth aspect of the present invention, a learning method is provided. The learning method includes receiving, by the learning apparatus, a correspondence between each produced object of a target process which is targeted and a quality evaluation of each downstream produced object produced in a downstream process by using each produced object of the target process. The learning method includes generating, by the learning apparatus, through learning, an estimation model for estimating the evaluation of the downstream produced object from at least one production parameter, by using the at least one production parameter about the production of each produced object of the target process and the quality evaluation of each downstream produced object produced by using each produced object of the target process. The learning method includes calculating, by the learning apparatus, a model evaluation based on at least one of certainty or complexity of the estimation model. The learning method includes sending, by the learning apparatus, the calculated model evaluation, to an evaluation apparatus for evaluating at least one upstream process by using a model evaluation about each of the at least one upstream process which is upstream of the downstream process.

In the fifth aspect of the present invention, a learning program which is executed by a computer is provided. The learning program causes the computer to function as a correspondence receiving unit for receiving a correspondence between each produced object of a target process which is targeted and a quality evaluation of each downstream produced object produced in a downstream process by using each produced object of the target process. The learning program causes the computer to function as a learning processing unit for generating, through learning, an estimation model for estimating the evaluation of the downstream produced object from at least one production parameter, by using the at least one production parameter about the production of each produced object of the target process and the quality evaluation of each downstream produced object produced by using each produced object of the target process. The learning program causes the computer to function as a calculating unit for calculating a model evaluation based on at least one of certainty or complexity of the estimation model. The learning program causes the computer to function as a model evaluation sending unit for sending the model evaluation calculated by the calculating unit, to an evaluation apparatus for evaluating at least one upstream process by using a model evaluation about each of the at least one upstream process which is upstream of the downstream process.

In the sixth aspect of the present invention, an evaluation method is provided. The evaluation method includes receiving, by the evaluation apparatus, a model evaluation which is based on at least one of certainty or complexity of the estimation model, from the learning apparatus for generating, for each of the at least one upstream process, through learning, the estimation model for estimating a quality evaluation of a downstream produced object from the at least one production parameter, by using the quality evaluation of each downstream produced object produced by using the at least one production parameter about the production of each upstream produced object according to the upstream process, and each upstream produced object of the upstream process. The evaluation method includes evaluating, by the evaluation apparatus, the at least one upstream process based on the model evaluation about each of the at least one upstream process.

In the seventh aspect of the present invention, an evaluation program which is executed by a computer is provided. The evaluation program causes the computer to function as a model evaluation receiving unit for receiving a model evaluation which is based on at least one of certainty or complexity of the estimation model, from the learning apparatus for generating, for each of the at least one upstream process, through learning, the estimation model for estimating a quality evaluation of a downstream produced object from the at least one production parameter, by using the quality evaluation of each downstream produced object produced by using the at least one production parameter about the production of each upstream produced object according to the upstream process, and each upstream produced object of the upstream process. The evaluation program causes the computer to function as a process evaluation unit for evaluating the at least one upstream process based on the model evaluation about each of the at least one upstream process.

The summary clause does not necessarily describe all necessary features of the embodiments of the present invention. The present invention may also be a sub-combination of the features described above. In general, the present invention is defined in the appended independent claims. Further preferred embodiments are defined in the dependent claims.

### BRIEF DESCRIPTION OF THE DRAWINGS

Fig. 1 shows an evaluation system 10 according to the present embodiment together with a supply chain including a plurality of manufacturer 20a-l.
Fig. 2 shows a configuration of a learning apparatus 100 according to the present embodiment.
Fig. 3 shows one example of production data stored in a production data storage unit 215 according to the present embodiment.
Fig. 4 shows an operation flow of the learning apparatus 100 according to the present embodiment.
Fig. 5 shows a configuration of an evaluation apparatus 110 according to the present embodiment.
Fig. 6 shows an operation flow of the evaluation apparatus 110 according to the present embodiment.
Fig. 7 shows one example of a correspondence between a produced object and a final produced object of each process.
Fig. 8 shows an example of a computer 2200 in which a plurality of aspects of the present invention may be entirely or partially embodied.

### DESCRIPTION OF EXEMPLARY EMBODIMENTS

deleted

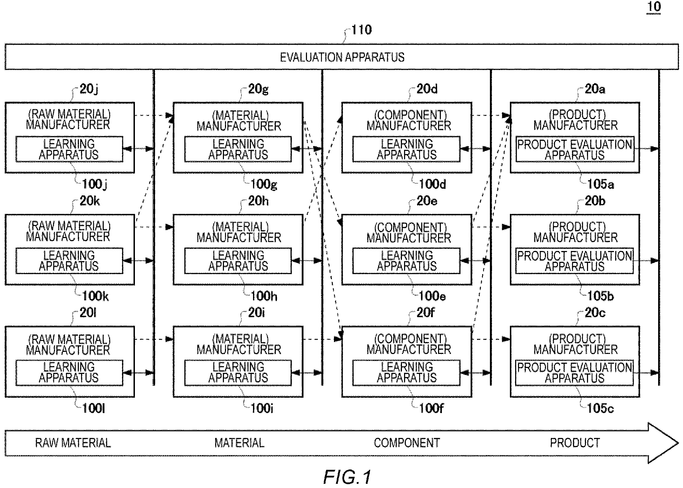

Fig. 1 shows an evaluation system 10 according to the present embodiment together with a supply chain including a plurality of manufacturer 20a-l. For example, there is a common flow, that is, a chain of supply, from the production to sale for substantial things, such as automobiles, appliances, industrial equipment, clothes and food. This is referred to as a supply chain. The supply chain includes a plurality of production processes for producing a produced object from a raw material (also indicated as "process"). As one example, the supply chain shown in this figure includes raw material manufacturers 20j-l, material manufacturers 20g-i, component manufacturers 20d-f, and product manufacturers 20a-c (collectively referred to as manufacturers 20).

For example, the raw material manufacturers 20j-l produce raw materials such as petroleum products from a starting material such as crude oil or natural gas, to supply them to the material manufacturers 20g-i. In the example of this figure, the raw material manufacturer 20j supplies the raw materials to the material manufacturer 20g, the raw material manufacturer 20k supplies the raw materials to the material manufacturers 20g-h, and the raw material manufacturer 20l supplies the raw materials to the material manufacturer 20i.

The material manufacturers 20g-i produce materials such as resin materials from raw materials such as petroleum products which are the produced objects of the raw material manufacturers 20j-l, to supply them to the component manufacturers 20d-f. In the example of this figure, the material manufacturer 20g supplies the materials to the component manufacturers 20e-f, the material manufacturer 20h supplies the materials to the component manufacturer 20d, and the material manufacturer 20i supplies the materials to the component manufacturer 20f.

The component manufacturers 20d-f produce components such as an electronic component from materials such as the resin materials which are the produced objects of the material manufacturers 20g-i. and supply them to the product manufacturers 20a-c. In the example of this figure, the component manufacturer 20d supplies the components to the product manufacturer 20a, the component manufacturer 20e supplies the components to the product manufacturers 20a-b, and the component manufacturer 20f supplies the components to the product manufacturer 20a and the product manufacturer 20c.

The product manufacturers 20a-c produces finished products by assembling the components such as the electronic components which are the produced objects of the component manufacturers 20d-f. In this manner, in the supply chain, from an upstream toward a downstream, for example, a plurality of manufacturers 20 such as the raw material manufacturers 20j-l, the material manufacturers 20g-i, the component manufacturers 20d-f, and the product manufacturers 20a-c achieve the chain of supply as a player.

Herein, a "production process (process)" indicates the entire operations in which the manufacturers 20 responsible for the production process processes the produced objects received from the upstream side to manufacture the produced objects of the manufacturers 20. The manufacturers 20 may perform a manufacturing operation corresponding to the "production process" by using a manufacturing line installed within a factory, for example, or may include a plurality of operational processes in which such manufacturing line itself is further subdivided. It should be noted that, in this embodiment, one "production process" indicates the entire manufacturing operations that one manufacturer 20 is responsible for, but the "production process" may correspond to only a part of the manufacturing operations that one manufacturer 20 is responsible for, or may include a series of manufacturing operations that two or more manufacturers 20 are responsible for.

In such a supply chain, in general, the quality of the produced objects in the downstream production process may be affected by the quality of the produced objects of the upstream production process. That is, for example, the quality of the finished products which are the produced objects of the product manufacturer 20b may be affected by the quality of the components which are the produced objects of the component manufacturer 20e which is a supply source. Similarly, the quality of the components which are the produced objects of the component manufacturer 20e may be affected by the quality of the materials which are the produced objects of the material manufacturer 20g which is a supply source. Similarly, the quality of the materials which are the produced objects of the material manufacturer 20g may be affected by the quality of the raw materials which are the produced objects of the raw material manufacturers 20j-k which are supply sources. In this embodiment, production in the supply chain in which such chain of the quality may be occur may be a target to be evaluated.

Recently, the supply chain has become complicated, and as shown in the example of this figure, the component manufacturer 20e often supplies the components to the product manufacturer 20a and the product manufacturer 20b which are competing with each other. Accordingly, if the product manufacturer 20a provides the component manufacturer 20e with detailed technical information about quality improvements or cost savings of the components of the component manufacturer 20e, for example, in order to improve the quality of a product to be a final produced object or suppress costs of the final product, then such technical information may be leaked to the competing product manufacturer 20b or such technical information may contribute to quality improvements or cost savings of the products of the competing product manufacturer 20b. Accordingly, it is preferable for the product manufacturer 20a to allow quality improvements or cost savings of the components which are produced by the component manufacturer 20e while suppressing the information provided to the component manufacturer 20e as much as possible.

A similar relationship occurs between the component manufacturers 20d-f and the material manufacturers 20g-i, and between the material manufacturers 20g-i and the raw material manufacturers 20j-l which are upstream in the supply chain. As a result, the manufacturers 20d-l on the upstream blindly perform a process improvement according to guess or hypothesis based on little information from the downstream side of the supply chain, and thereby numerous extra workloads occur in the entire supply chains, to delay the progress of the improvement.

Therefore, the evaluation system 10 according to the present embodiment provides an evaluation environment for improving the processes of each manufacturer 20 while suppressing information to be provided by each manufacturer 20. The evaluation system 10 includes one or more product evaluation apparatuses 105a-c (also indicated as a product evaluation apparatus 105) associated with a final process (the most downstream process) of the supply chain, learning apparatuses 100d-l (also indicated as a learning apparatus 100) associated with each process except for the final process in the supply chain, and an evaluation apparatus 110.

Each of the plurality of product evaluation apparatus 105 is provided in association with the final process which manufactures the final produced object (the most downstream produced object). That is, in this embodiment, each of the plurality of product evaluation apparatus 105 is provided in each of the product manufacturers 20 having the final process for manufacturing the final produced object.

The product evaluation apparatus 105 evaluates the quality for each of the final produced objects. The product evaluation apparatus 105 then supplies, to the evaluation apparatus 110, an association between each produced object from the direct upstream side and quality evaluation of each final produced object produced by using them. It should be noted that the evaluation system 10 according to the present embodiment considers a process in which the quality evaluation of the produced object is obtained as a "final process" for convenience, to evaluate each process which is upstream of the final process by using the quality evaluation of the produced object of the final process; wherein the "final process" indicates, in the supply chain, a process on the most downstream within the range which is targeted for the quality evaluation and the process evaluation of the produced object performed by the evaluation system 10. Accordingly, the final produced objects manufactured by the product manufacturers 20a-c may not necessarily be a finished product which can be assigned to a user and used by a user, and may be used as a component or the like of yet another product or the like which is downstream of the range of the supply chain which is evaluated by the evaluation system 10 (that is, downstream of the manufacturers 20a-c).

In the above sense, the process in which the quality evaluation of the produced object is obtained is not necessarily the final process or the most downstream process in the entire supply chain. Accordingly, a process on the most downstream within the range which is targeted for the quality evaluation and the process evaluation of the produced object performed by the evaluation system 10 and in which the quality evaluation of the produced object is obtained is also simply indicated as a "downstream process" and the produced object of the "downstream process" is also indicated as a "downstream produced object". Also, within the range which is targeted for the quality evaluation of the produced object and the process evaluation performed by the evaluation system 10, a process on the upstream side of the "downstream process" is also indicated as an "upstream process", and a produced object of the "upstream process" is also indicated as an "upstream produced object".

Herein, unless indicated as a "direct upstream" or the like, the "upstream" includes not only a process on the direct upstream such as the process of the material manufacturer 20h with respect to the process of the component manufacturer 20d, for example, but also a process which is located on the upstream, wherein another at least one process is sandwiched between the process and the one on the downstream, such as the process of the raw material manufacturer 20k with respect to the process of the component manufacturer 20d. Similarly, unless indicated "directly on the downstream of a process" or the like, an expression "on the downstream of a process" includes not only a process which is located directly on the downstream, and but also a process which is located on the downstream, wherein another at least one process is sandwiched between the process and the one on the downstream.

The learning apparatus 100 is provided to correspond to each of the at least one upstream process targeted for the process evaluation which is performed by the evaluation system 10. In this embodiment, for convenience of description, the evaluation system 10 targets a plurality of upstream processes of the plurality of manufacturers 20d-l for the process evaluation. Accordingly, in this embodiment, each of the plurality of learning apparatuses 100 is provided in association with each process on the upstream side of the downstream process (the final process). That is, in this embodiment, each of the plurality of learning apparatuses 100 is provided in each of the manufacturers 20d-l having the upstream processes which are on the upstream side of the downstream process.

Also, the evaluation system 10 may also target one or more downstream processes for the process evaluation. In this case, the product evaluation apparatus 105 may include the learning apparatus 100 for the downstream process as a part of itself, to further target the downstream process for the process evaluation.

For a target process which is targeted for processing, the learning apparatus 100 supplies an association between each produced object supplied from the direct upstream process of the target process and each produced object of the target process to the evaluation apparatus 110. Also, the learning apparatus 100 receives, from the evaluation apparatus 110, a correspondence between each produced object of the target process and the quality evaluation of each downstream produced object. The learning apparatus 100 generates, through learning, an estimation model for estimating the quality evaluation of the downstream produced object from one or more production parameters, by using the one or more production parameters used for the production of each produced object of the target process and the quality evaluation of each downstream produced object produced by using each produced object of the target process. The learning apparatus 100 then calculates a model evaluation of the learned estimation model and sends it to the evaluation apparatus 110.

The evaluation apparatus 110 is connected to each of the plurality of product evaluation apparatuses 105 and each of the plurality of learning apparatuses 100. The evaluation apparatus 110 receives an association between each produced object of the direct upstream side of the downstream process and the quality evaluation of each downstream produced object from each of the product evaluation apparatuses 105. Also, for each process (each process except for the most upstream process) of the manufacturers 20d-l, the evaluation apparatus 110 receives an association between a produced object supplied from the upstream side process and a produced object of the target process from each learning apparatus 100. The evaluation apparatus 110 generates, by using the association, a correspondence between each produced object of each upstream process and the quality evaluation of each downstream produced object produced by using each produced object of each upstream process. The evaluation apparatus 110 then sends, to the learning apparatus 100 associated with each process, a correspondence between each produced object of the process and the quality evaluation of each downstream produced object.

Also, the evaluation apparatus 110 evaluates at least one process targeted for the process evaluation by using the model evaluation for each of the at least one process targeted for the process evaluation. The evaluation apparatus 110 then sends, in response to that a process is determined to be improved, an improvement request message to the learning apparatus 100 associated with the process.

In the above-described embodiment, the quality of the final produced object may be significantly affected by a specific production parameter among each production parameter used in each process from the most upstream to the most downstream. When a production parameter of a process has a significant effect on the quality of the downstream produced object, the learning apparatus 100 associated with that process can generate a good estimation model for estimating the quality evaluation of the downstream produced object from the production parameter of that process. On the other hand, when any production parameter of a certain process hardly affects the quality of the downstream produced object, the learning apparatus 100 associated with that process is not a good estimation model for describing the quality of the downstream produced object from the production parameter of that process, even if an estimation model for estimating the quality evaluation of the downstream produced object from the production parameter of that process is generated.

The evaluation system 10 uses this property and thereby, in the evaluation system 10, the learning apparatus 100 associated with each process generates an estimation model configured to estimate the quality evaluation of the downstream produced object from at least one production parameter for each process, and the evaluation apparatus 110 requires improvement of the process corresponding to the learning apparatus 100 which has succeeded to generate a good estimation model. Thereby, the evaluation system 10 can require improvement of the process using the production parameter which has a significant effect on the downstream produced object quality.

According to the evaluation system 10 shown above, each learning apparatus 100 sends, for the target process which is targeted, to the evaluation apparatus 110: an association between each produced object supplied from the upstream side and each produced object of the target process; and a model evaluation of the generated estimation model. However, each learning apparatus 100 does not need to send the production parameter used in the target process to the evaluation apparatus 110. The evaluation apparatus 110 can evaluate each process by using the model evaluation received from each learning apparatus 100 without receiving the production parameter used in each learning apparatus 100. Accordingly, the evaluation system 10 can provide an environment where each manufacturer 20 can improve the target process which affects the quality of the final produced object without each manufacturer 20 disclosing its production parameter.

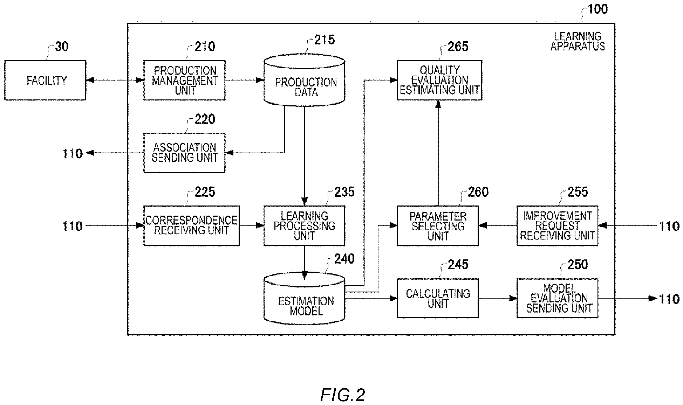

Fig. 2 shows a configuration of a learning apparatus 100 according to the present embodiment. The learning apparatus 100 may be a computer such as a PC (personal computer), a workstation, a server computer or a general-purpose computer installed in a corresponding manufacturer 20, may be a portable computer such as a tablet computer or a smartphone, or may be a computer system in which a plurality of computers are connected. Such a computer system is also a computer in a broad sense. The learning apparatus 100 may be realized by executing a learning program on such a computer. Also, the learning apparatus 100 may be implemented by one or more virtual computer environments which can be run in a computer. Alternatively, the learning apparatus 100 may be a dedicated computer designed for execution of various kinds of processes related to the target process, or may be special purpose hardware realized by dedicated circuitry.

Also, the learning apparatus 100 may be realized by a cloud computing system. Also in this case, the learning apparatus 100 may not disclose one or more production parameters used in the target process to another manufacturer 20 responsible for another process.

The learning apparatus 100 includes a production management unit 210, a production data storage unit 215, an association sending unit 220, a correspondence receiving unit 225, a learning processing unit 235, an estimation model storage unit 240, a calculating unit 245, a model evaluation sending unit 250, an improvement request receiving unit 255, a parameter selecting unit 260, and a quality evaluation estimating unit 265.

The production management unit 210 is connected to a facility 30 responsible for production in the target process which is targeted by the learning apparatus 100, and manages production of produced objects produced by the facility 30. The facility 30 is provided in, for example, an industrial plant such as a chemical plant, a plant for controlling the management of a wellhead such as a gas field or an oil field or surroundings thereof, or a plant for manufacturing products such as industrial products, and the like. For example, the facility 30 may include a control apparatus such as a Distributed Control System (DCS), and one or more process apparatuses for performing the production of produced objects by receiving control by such a control apparatus. The production management unit 210 may be connected to such a control apparatus.

The production management unit 210 acquires, from the facility 30, an association between each produced object which is a material or a component or the like of the target process supplied from the upstream side of the target process and each produced object of the target process which is supplied to the downstream side, to store the association in the production data storage unit 215. Herein, the learning apparatus 100 of the downstream process may acquire, from the facility 30, an association between each produced object which is a material or a component or the like of the target process supplied from the upstream side of the target process and a quality evaluation of the downstream produced object produced by using each produced object, to store the association in the production data storage unit 215. It should be noted that the production management unit 210 may acquire the association by receiving an input from an operator or the like who performs management or the like of the target process, instead of acquiring the association from the facility 30.

Also, the production management unit 210 acquires one or more production parameters about the production of each produced object of the target process from facility 30. Herein, a "produced object" may be an individual produced object such as one component or product, or may be a produced object of a specific management unit such as a predetermined amount (for example, one cubic meter) or a predetermined quantity (for example, one lot). In this embodiment, for convenience of description, the "produced object" indicates produced objects of one lot.

The production data storage unit 215 is connected to the production management unit 210. The production data storage unit 215 stores the association and the one or more production parameters acquired by the production management unit 210.

The association sending unit 220 is connected to the production data storage unit 215. The association sending unit 220 sends, to the evaluation apparatus 110, an association about the target process of the learning apparatus 100 stored in the production data storage unit 215.

The correspondence receiving unit 225 receives, from the evaluation apparatus 110, a correspondence between each produced object of a target process and a quality evaluation of each downstream produced object produced in a downstream process by using each produced object of the target process. It should be noted that, when the learning apparatus 100 is also provided in the final process, the learning apparatus 100 in the final process may not include the correspondence receiving unit 225, and may acquire, from the production data storage unit 215, a correspondence between each produced object which is a material or a component or the like of the target process, which is stored in the production data storage unit 215, and a quality evaluation of each downstream produced object.

The learning processing unit 235 is connected to the production data storage unit 215 and the correspondence receiving unit 225. The learning processing unit 235 associates, by using the correspondence between each produced object of the target process and the quality evaluation of each downstream produced object, one or more production parameters about the production of each produced object of the target process, which is stored in the production data storage unit 215 and the quality evaluation of each downstream produced object. The learning processing unit 235 then generates, through learning, an estimation model for estimating the quality evaluation of the downstream produced object from one or more production parameters, by using the one or more production parameters about the production of each produced object of the target process and the quality evaluation of each downstream produced object produced by using each produced object of the target process.

The estimation model storage unit 240 is connected to the learning processing unit 235. The estimation model storage unit 240 stores an estimation model generated by the learning processing unit 235.

The calculating unit 245 is connected to the estimation model storage unit 240. The calculating unit 245 calculates a model evaluation of the estimation model which is generated by the learning processing unit 235 and stored in the estimation model storage unit 240. The model evaluation sending unit 250 is connected to the calculating unit 245. The model evaluation sending unit 250 sends the model evaluation calculated by the calculating unit 245 to the evaluation apparatus 110. In response, the evaluation apparatus 110 evaluates at least one upstream process by using a model evaluation about each of the at least one upstream process which is upstream of the downstream process which provides the quality evaluation of the produced object. The evaluation apparatus 110 sends, in response to that the target process is determined to be improved based on the model evaluation about each of the at least one upstream process, an improvement request message to the learning apparatus 100 corresponding to the target process. It should be noted that when at least one downstream process is also the target of the process evaluation, the evaluation apparatus 110 may evaluate each upstream process by using the model evaluation about each process including the at least one upstream process and the at least one downstream process which are the targets of the process evaluation, and may send an improvement request message to the learning apparatus 100 corresponding to the process targeted to be improved.

The improvement request receiving unit 255 receives the improvement request message when the evaluation apparatus 110 sends the improvement request message for the target process. The parameter selecting unit 260 is connected to the estimation model storage unit 240 and the improvement request receiving unit 255. The parameter selecting unit 260 selects a production parameter to be adjusted among one or more production parameters in the target process, in response to the reception of the improvement request message directed to the learning apparatus 100.

The quality evaluation estimating unit 265 is connected to the estimation model storage unit 240 and the parameter selecting unit 260. The quality evaluation estimating unit 265 estimates a quality evaluation of the downstream produced object produced in the downstream process by using each produced object of the target process in a case of adjusting the production parameter selected by the parameter selecting unit 260.

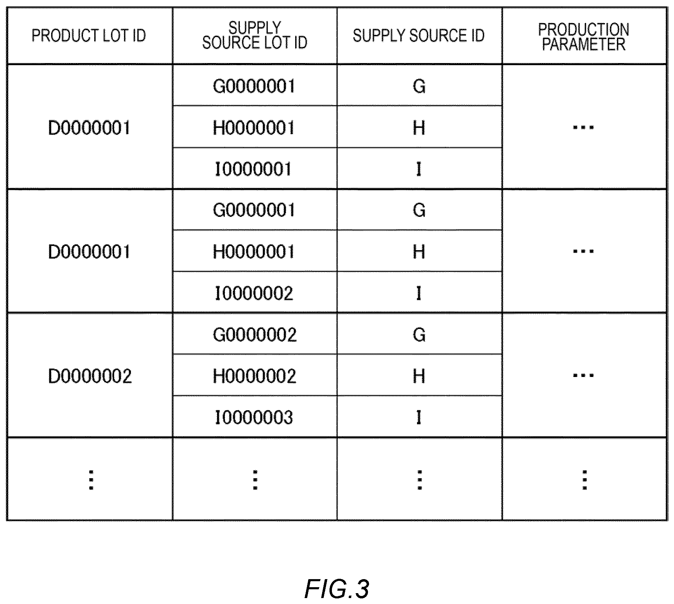

Fig. 3 shows one example of production data stored in a production data storage unit 215 according to the present embodiment. The production data includes, with respect to each produced object of the target process, an association with a produced object of the closest upstream process which is used for producing the produced object of the target process, and one or more production parameters about the production of the produced object of the target process.

In this embodiment, the production data stores, with respect to each of a plurality of entries, product lot identification information (product lot ID) for identifying the produced object (lot) of the target process, a supply source lot identification information (supply source lot ID) and a supply source identification information (supply source ID) for identifying each of the one or more produced objects of the closest upstream process which is supplied for the target process, and one or more production parameters used for producing the produced object of the target process.

In the example of this figure, a production data which is stored in the production data storage unit 215 of the learning apparatus 100d provided in the manufacturer 20d is shown. In the example of this figure, a produced object having a product lot ID of "D0000001" in the target process is produced by a production process according to a production parameter stored in the "production parameter" section, by using an upstream produced object having a product lot ID of "G0000001" which is supplied from a manufacturer 20 on the direct upstream with a supply source ID of "G" (for example, manufacturer 20g), an upstream produced object having a product lot ID of "H0000001" which is supplied from a manufacturer 20 on the direct upstream with a supply source ID of "H" (for example, manufacturer 20h), and an upstream produced object having a product lot ID of "I0000001" which is supplied from a manufacturer 20 on the direct upstream with a supply source ID of "I" (for example, manufacturer 20i). That is, the produced object having the product lot ID of "D0000001" is a component which is produced by using: a material from the manufacturer 20g identified by "G0000001"; a material from the manufacturer 20h identified by "H0000001"; and a material from the manufacturer 20i identified by "I0000001".

Two or more produced objects in the target process may be produced by using the same produced object (for example, a produced object from the same lot) in the upstream process, and one produced object in the target process (for example, one lot of produced objects) may be produced by using different produced objects in the upstream process. In the example of this figure, the produced object (lot) indicated by "D0000001" is partially produced by using a set of an upstream produced object (lot) indicated by "G0000001", "H0000001", and "I0000001", and the rest is produced by using a set of an upstream produced object (lot) indicated by "G0000001", "H0000001", and "I0000002".

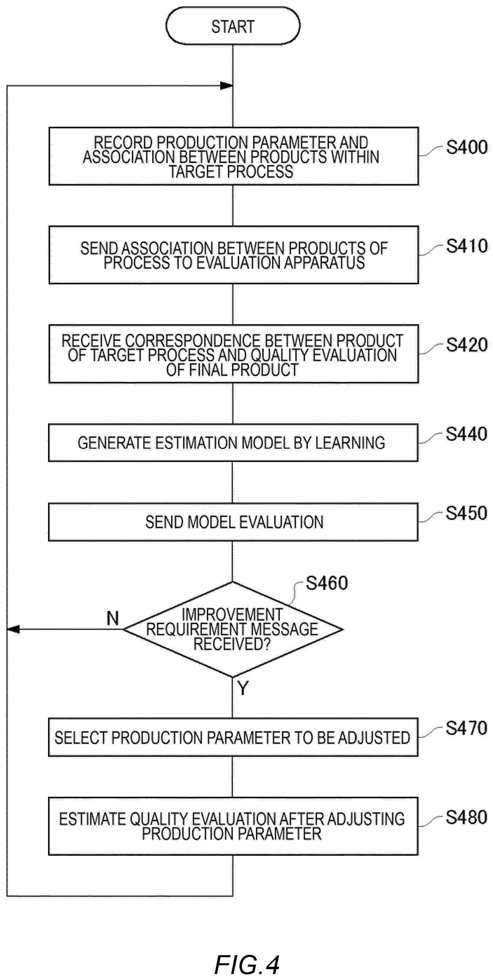

Fig. 4 shows an operation flow of the learning apparatus 100 according to the present embodiment. In a step S400 (S400), in response to the production of each produced object in the target process targeted by the learning apparatus 100, the production management unit 210 records, in the production data storage unit 215, at least one production parameter about the production of each produced object of the target process, and production data including an association between each upstream produced object which is a material or a component or the like of the target process supplied from the upstream side of the target process and each produced object of the target process. Herein, the learning apparatus 100 of the downstream process may record, on the production data storage unit 215, an association between each upstream produced object which is the material or the component or the like of the target process and the quality evaluation of each produced object of the target process.

In S410, the association sending unit 220 sends, to the evaluation apparatus 110, an association about the target process of the learning apparatus 100 stored in the production data storage unit 215. In S420, the correspondence receiving unit 225 receives, from the evaluation apparatus 110, a correspondence between each produced object of a target process and a quality evaluation of each downstream produced object produced in a downstream process.

In S440, the learning processing unit 235 generates, through learning, an estimation model for estimating a quality evaluation of the downstream produced object from the at least one production parameter, by using the at least one production parameter about the production of each produced object of the target process and a quality evaluation of each downstream produced object produced by using each produced object of the target process. Herein, at least a part of the production parameter may be any control parameter, such as distribution of raw material, reaction temperature, reaction time, and pressure, which can be set in the facility 30 such as a process apparatus used for the target process and may be measured data which is measured by a piece of sensor equipment such as a pressure gauge, a flow meter, and a temperature sensor installed in a plant, for example. Also, the production parameter is not limited to the control parameter only, but may be any parameter which relates to four factors of production; "material", "Machine", "Method", and "Man" which are called as "4M".

The learning processing unit 235 may use a parameter directly obtained from the target process as a production parameter, or may process the parameter directly obtained from the target process to use it as the production parameter. For example, the learning processing unit 235 may use, as the production parameter, a general feature quantity of the parameter (for example, a feature quantity of average or distribution or the like showing a trend of change of the parameter), a feature quantity specific to the target process (for example, a parameter change or parameter fluctuation when the process starts), or a factor which determines the quality of the produced object of the target process, which is defined by the manufacturer 20 responsible for the target process or the like.

The quality evaluation of the downstream produced object may be an evaluated numerical value such as scores between 0 and 100, for example. Also, the quality evaluation of the downstream produced object may be rating information such as A, B, or C.

The learned estimation model, when one or more production parameters used for producing the produced object is input thereto, outputs an estimation value of the quality evaluation of the downstream produced object which is produced by using such production parameter. The estimation model uses, as one example, various kinds of machine learning algorithm including a neural network, a support vector machine (SVM), a random forest, a gradient boosting, a logistic regression or the like, and is learned to predict an appropriate output for the given input.

The learning processing unit 235 uses, as learning data, a set consisting of: input data for learning including at least one production parameter about the production of each produced object of the target process; and a label for learning including the quality evaluation of each downstream produced object produced by using each produced object of the target process. The learning processing unit 235 updates the learning target parameter of the estimation model so that an error between an estimation value of the quality evaluation which is an output of the estimation model when the input data for learning in each sample within the learning data is input to the estimation model, and the label for learning is reduced. For example, when the neural network is used as the estimation model, the learning processing unit 235 uses the error between the output value which is output by the neural network in response to each sample being input and the label, to adjust the weight and bias of each neuron or the like between each of the neurons of the neural network by using a method such as back propagation.

Herein, the quality of the downstream produced object may be affected by the production parameter used for each process from the most upstream to the most downstream. However, the learning processing unit 235 generates an estimation model for estimating a quality evaluation of the downstream produced object from the at least one production parameter which is only related to the target process, among the plurality of processes consisting the supply chain, without reference to the production parameter related to processes other than the target process.

In this way, the learning processing unit 235 may convert the generated estimation model into another estimation model by using a method such as mimic modeling and then use the converted estimation model in the following steps. The mimic modeling is a method to convert a machine learning model into a more simple machine learning model by using more simple machine learning, and is effective when an input data (a plurality of production parameters in the present embodiment) is complicated (when there are numerous data or when the data has a mutual dependency).

In S450, the calculating unit 245 calculates a model evaluation of the estimation model generated by the learning processing unit 235. The model evaluation calculated by the calculating unit 245 may be based on at least one of certainty or complexity of the estimation model.

When the certainty of the estimation model is used for the model evaluation, the calculating unit 245 calculates an indicator indicating the certainty of the estimation model such as a correct answer rate or an output error of the estimation model with respect to the learning data, the indicator being indicative of; how accurately the quality evaluation can be estimated by the estimation model; or alternatively, how much error can be exist in the estimation of the quality evaluation. The calculating unit 245 uses the certainty of the estimation model itself as the model evaluation, or uses the certainty of the estimation model as one element of the model evaluation.

The calculating unit 245 may calculate the certainty of the estimation model by the cross test. That is, the learning processing unit 235 may generate the estimation model by performing a learning process by using a part of the learning data, and the calculating unit 245 may evaluate the certainty of the estimation model by using another part of the learning data. It should be noted that, in this embodiment, the certainty of the estimation model is a value in which, as the certainty increases, a correct answer rate of the estimation model increases or the output error decreases. Alternatively, the certainty of the estimation model can be a value in which, as the certainty decreases, a correct answer rate of the estimation model increases or the output error decreases.

The calculating unit 245 uses the complexity of the estimation model for the model evaluation. The inventors of the present application figured out an empirical rule that a relationship between each production parameter and the quality of the final produced object can be described by a relatively simple relationship. This means that if a production parameter has an effect on the quality of the final produced object, the quality of the downstream produced object is changed in response to that production parameter, regardless of a value of other production parameters independent of that production parameter. This can be also figured out from that the estimation model is assumed to be capable of being simplified to a model which estimates, among the entire production parameters, the quality of the downstream produced object from only a production parameter which affects the quality of the downstream produced object,.

Accordingly, the calculating unit 245 also calculates the model evaluation by using the complexity of the estimation model. The calculating unit 245 may use, as the complexity of the estimation model, the indicator which is indicative of how complex a formula can be used to explain the relationship between input and output, such as Rademacher complexity, VC dimension, or generalization error limit. The calculating unit 245 uses the complexity of the estimation model itself as the model evaluation, or uses the complexity of the estimation model as one element of the model evaluation. It should be noted that, in this embodiment, the estimation model becomes more complex and the model evaluation decreases as the value of the complexity of the estimation model increases. Alternatively, the estimation model can also become more complex as the value of the complexity of the estimation model decreases.

In this embodiment, the calculating unit 245 raises the model evaluation in at least one of a case when the certainty of the estimation model is high due to a high correct answer rate of the estimation model or the like, or a case when the complexity of the estimation model is low and the estimation model is simple, and lowers the value of the model evaluation in at least one of a case when the certainty of the estimation model is low due to a low correct answer rate of the estimation model or the like, or a case when the complexity of the estimation model is high and the estimation model is complex. Alternatively, the calculating unit 245 may generate the model evaluation having a low value when the certainty of the estimation model is high, or when the estimation model is simple.

The model evaluation generated in such a way is an indicator which indicates the evaluation of the learned estimation model, but can be utilized as an indicator which indicates how much the production parameter of the target process affects the quality of the final produced object. In S450, the model evaluation sending unit 250 sends such model evaluation calculated by the calculating unit 245 to the evaluation apparatus 110.

In S460, the improvement request receiving unit 255 judges whether the improvement request message has been received from the evaluation apparatus 110. When the improvement request message has not been received, the learning apparatus 100 causes the process to proceed S400 to add a newly produced object and then perform the processes from S400 to S450. When the improvement request message has been received, the learning apparatus 100 causes the process to proceed S470.

In S470, the parameter selecting unit 260 selects at least one production parameter to be adjusted in response to the improvement request, among the one or more production parameters in the target process. Herein, when a factor parameter which is a factor for quality change within the one or more production parameters can be directly extracted from the estimation model generated in S440, the parameter selecting unit 260 may directly extract a factor parameter from the estimation model. The parameter selecting unit 260 can directly extract the factor parameter from the estimation model, for example, in a case such as when the estimation model uses sparse learning and a relationship between input and output thereof is clear, and when the estimation model uses a neural network and the plurality of production parameters can be arranged in order of the effect on the quality based on the weight allocated to the propagation path from each input layer to each output layer.

When the factor parameter cannot be directly extracted, the parameter selecting unit 260 generates pseudo data distributed over a wide range within a space mapped with the plurality of production parameters by using the estimation model. Herein, the parameter selecting unit 260 may generate pseudo data including the plurality of production parameters and the quality evaluation by using a Generative Adversarial Network (GAN). Subsequently, the parameter selecting unit 260 generates, through learning, a machine learning model which can estimate the factor such as the sparse learning by using the generated pseudo data, then extracts the factor parameter which affects the quality among the plurality of production parameters.

The parameter selecting unit 260 may extract a production parameter in which a degree of the effect on the quality exceeds a predetermined threshold as the factor parameter. Alternatively, the parameter selecting unit 260 may extract, as a factor parameter, a predetermined quantity of production parameter, in order from a production parameter whose degree of the effect on the quality is greater.

In S480, the quality evaluation estimating unit 265 estimates how a quality evaluation of the downstream produced object produced in the downstream process by using each produced object of the target process changes, when adjusting the production parameter selected as the factor parameter. The quality evaluation estimating unit 265 may generate a scatter diagram of one or more factor parameters (in one dimension or multiple dimensions) and indicate non-defective/defective of the downstream produced object or a rating boundary of the downstream produced object in the scatter diagram.

Also, the quality evaluation estimating unit 265 may determine how much the factor parameter should be displaced to improve the quality of the downstream produced object. For example, the quality evaluation estimating unit 265 may judge how to change the factor parameter to cause the quality evaluation of the downstream produced object produced by using that factor parameter to be capable of raising the rating to exceed the rating boundary in the scatter diagram. Also, the quality evaluation estimating unit 265 may estimate the quality evaluation of the downstream produced object in a case where the factor parameter is changed, by using the estimation model stored in the estimation model storage unit 240.

The quality evaluation estimating unit 265 may generate a report including at least one of the above-described scatter diagram or a displacement amount of the factor parameter for the quality improvement and provide it to a user of the learning apparatus 100. Thereby, the learning apparatus 100 can input an indication from the user who refers to the report and then change a factor parameter value to be supplied to the facility 30 by a displacement amount. Also, the quality evaluation estimating unit 265 may perform a process for changing the value of the factor parameter used by the facility 30 via the production management unit 210 by the above-described displacement amount.

It should be noted that, when a specific downstream produced object is targeted for the improvement request in S460, the improvement request receiving unit 255 may receive an improvement request message including a produced object of the target process used for the specific downstream produced object and a quality evaluation of the downstream produced object. In this case, the parameter selecting unit 260 may determine, in S480, how much the factor parameter should be displaced to improve the quality of this specific downstream produced object.

According to the learning apparatus 100 shown above, by sending an association between each produced object supplied from the upstream side about the target process and each produced object of the target process to the evaluation apparatus 110, each learning apparatus 100 receives a correspondence between the produced object of the target process and the quality evaluation of the downstream produced object. Each learning apparatus 100 then calculates, independently from the learning apparatus 100 associated with another process, a model evaluation as an indicator for showing how much the production parameter of the target process affects the quality of the downstream produced object. Accordingly, each learning apparatus 100 makes a system environment which is realizable in which the process can be evaluated, without disclosing the production parameter to another learning apparatus 100 or another evaluation apparatus 110.

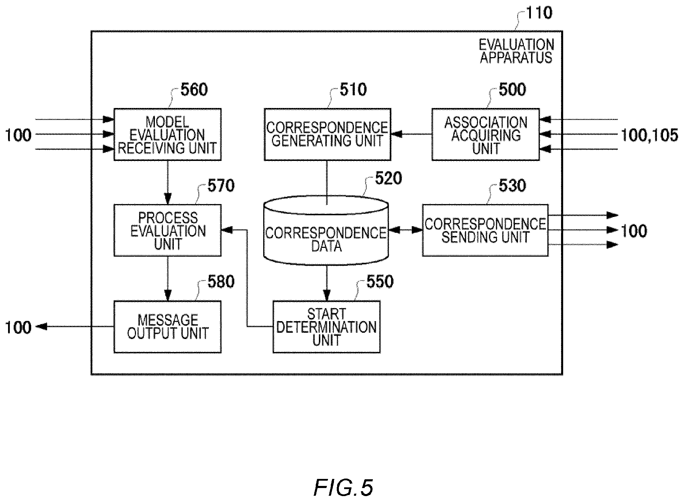

Fig. 5 shows a configuration of an evaluation apparatus 110 according to the present embodiment. The evaluation apparatus 110 may be a computer such as a PC (personal computer), a workstation, a server computer or a general-purpose computer, may be a portable computer such as a tablet computer or a smartphone, or may be a computer system in which a plurality of computers are connected. Such a computer system is also a computer in a broad sense. The evaluation apparatus 110 may be realized by executing an evaluation program on such a computer. Also, the evaluation apparatus 110 may be implemented by one or more virtual computer environments which can be run in a computer, or may be realized by a cloud computing system. Alternatively, the evaluation apparatus 110 may be a dedicated computer designed for evaluation of the target process of each learning apparatus 100, or may be a special purpose hardware realized by a dedicated circuitry.

The evaluation apparatus 110 includes an association acquiring unit 500, a correspondence generating unit 510, a correspondence data storage unit 520, a correspondence sending unit 530, a start determination unit 550, a model evaluation receiving unit 560, a process evaluation unit 570, and a message output unit 580. With respect to one or more upstream processes included in the supply chain, the association acquiring unit 500 receives, from the one or more learning apparatuses 100, an association between each produced object supplied from the direct upstream side process and each produced object of the process which is supplied to the direct downstream side. Also, with respect to the one or more downstream processes, the association acquiring unit 500 receives, from one or more product evaluation apparatuses 105, an association between each produced object supplied from the direct upstream side process and the quality evaluation of each downstream produced object.

The correspondence generating unit 510 is connected to the association acquiring unit 500. The correspondence generating unit 510 generates a correspondence between each produced object of the one or more upstream processes and the quality evaluation of each produced object of the downstream process, by using each association acquired by the association acquiring unit 500. The correspondence data storage unit 520 is connected to the correspondence generating unit 510. The correspondence data storage unit 520 stores correspondence data which is data of correspondences generated by the correspondence generating unit 510. The correspondence sending unit 530 is connected to the correspondence data storage unit 520. The correspondence sending unit 530 sends a correspondence about a produced object of each upstream process, among the correspondences generated by the correspondence generating unit 510, to the learning apparatus 100 associated with each upstream process.

The start determination unit 550 is connected to the correspondence data storage unit 520. The start determination unit 550 receives a quality evaluation of at least one downstream produced object from the correspondence data storage unit 520, and then determines whether to start the evaluation of the at least one upstream process by the process evaluation unit 570 based on the quality evaluation of the at least one downstream produced object.

The model evaluation receiving unit 560 receives, with respect to each of the at least one upstream process, a model evaluation of an estimation model, from a learning apparatus 100 which generates an estimation model for estimating a quality evaluation of the downstream produced object from the at least one production parameter in the process through learning. Herein, the model evaluation receiving unit 560 may also receive the model evaluation of the estimation model from the learning apparatus 100 of the downstream process when the learning apparatus 100 is also provided in each of the downstream processes.

The process evaluation unit 570 is connected to the start determination unit 550 and the model evaluation receiving unit 560. The process evaluation unit 570 evaluates at least one upstream process based on a model evaluation about each of the at least one upstream process, in response to receiving, from the start determination unit 550, an indication to cause an evaluation of the at least one upstream process to be started. Herein, when the model evaluation of the estimation model is also received from the learning apparatus 100 of the most downstream process, the process evaluation unit 570 may evaluate at least one upstream process and downstream process based on a model evaluation about the downstream process, in addition to a model evaluation of each of the at least one upstream process.

The message output unit 580 is connected to the process evaluation unit 570. When there is an upstream process or a downstream process which is determined to be improved, the message output unit 580 sends an improvement request message of the process determined to be improved to a learning apparatus 100 associated with the process which is determined to be improved.

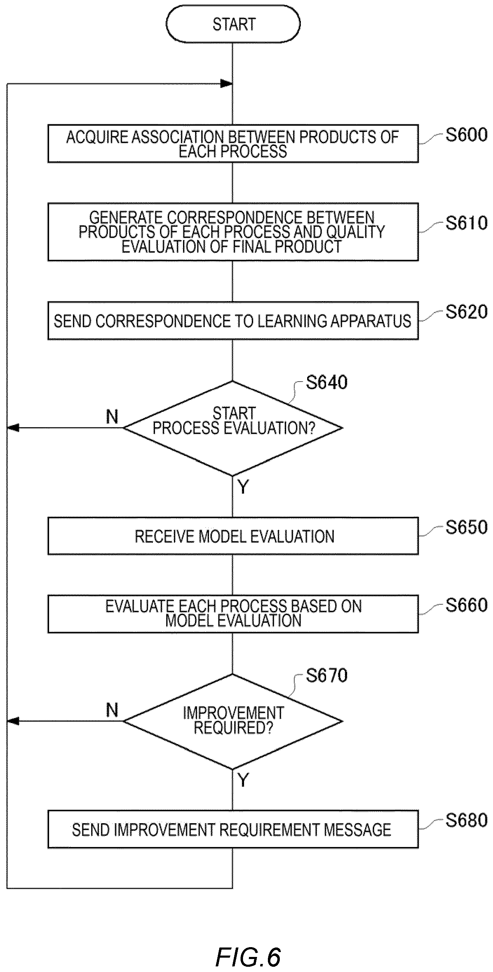

Fig. 6 shows an operation flow of the evaluation apparatus 110 according to the present embodiment. In S600, the association acquiring unit 500 receives, from the one or more learning apparatuses 100, an association in respective target processes, which is an association between each produced object supplied from the upstream side process and each produced object of the process which is supplied to the downstream side. Herein, the association acquiring unit 500 receives, from the learning apparatus 100 associated with the downstream process, an association in the downstream process, which is between each produced object supplied from the upstream side process and the quality evaluation of each downstream produced object.

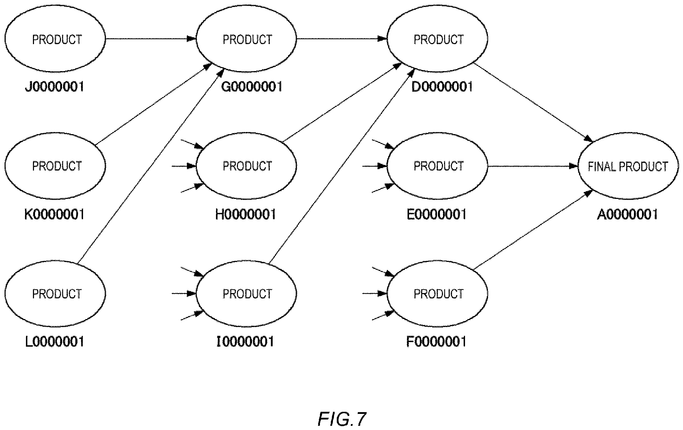

In S610, The correspondence generating unit 510 generates a correspondence between each produced object of the one or more upstream processes and the quality evaluation of each produced object of the downstream process, by using each association acquired by the association acquiring unit 500. A method for generating the correspondence by the correspondence generating unit 510 is described below in relation to Fig. 7.

In S620, the correspondence sending unit 530 sends the correspondence generated by the correspondence generating unit 510 to the learning apparatus 100 associated with each upstream process. Herein, the correspondence sending unit 530 may extract and send, with respect to the learning apparatus 100 associated with each upstream process, a correspondence related to the downstream produced object produced by using the produced object of the upstream process among entire correspondences.

In S640, the start determination unit 550 determines whether to start a process evaluation. In this embodiment, the start determination unit 550 determines whether to start the process evaluation, based on a quality evaluation of at least one downstream produced object acquired by the association acquiring unit 500 and stored in the correspondence data storage unit 520. The start determination unit 550 may start, for each downstream process of the manufacturers 20a-c, a process evaluation related to the downstream process, in response to that an indicator value becomes less than a threshold, wherein the indicator value is according to a quality evaluation of the downstream produced object produced in the most recent time, an average value of quality evaluations of two or more downstream produced objects produced in the recent predetermined period (for example, 1 hour), an average value of quality evaluations of a most recently produced predetermined number of downstream produced objects, or a quality evaluation of other downstream produced objects.

Also, the start determination unit 550 may start a process evaluation in response to a defective rate of the recently produced downstream produced object exceeding a threshold. It should be noted that, instead of the evaluation apparatus 110, the product evaluation apparatus 105 may determine whether to start the process evaluation, or the product evaluation apparatus 105 may receive an indication input for starting the process evaluation.

When the process evaluation is not started, the evaluation apparatus 110 may cause the process to proceed S600 and continue to collect information such as acquiring a new association (S600). It should be noted that the evaluation apparatus 110 may perform processes of S600-S620 after determination of starting the process evaluation (that is, when S640 results in "Y").

When the process evaluation is started, the model evaluation receiving unit 560 receives, with respect to each of the at least one upstream process and downstream process targeted for the process evaluation, a model evaluation of an estimation model, from a learning apparatus 100 which generates an estimation model for estimating a quality evaluation of the downstream produced object from the at least one production parameter in the process through learning. In S660, the process evaluation unit 570 evaluates each process targeted for the process evaluation, based on the model evaluation about each process targeted for the process evaluation.

Herein, the process evaluation unit 570 determines that, among at least one upstream process and downstream process targeted for process evaluation, a process having a model evaluation greater than a standard value should be improved. Thereby, the process evaluation unit 570 can determine that a process in which a production parameter has a greater effect on the quality of the final produced object is a process to be improved. A standard value as a determination standard whether to improve the process may be an absolute value (for example, the improvement is required when "model evaluation > 1.0",) or may be a relative value (for example, the improvement is required when "model evaluation of a certain process > a sixth-greatest model evaluation" (that is, when the model evaluation is one of first to fifth greatest ones in a higher order)).

When a model evaluation based on the certainty of the estimation model is used, the process evaluation unit 570 may determine to improve an upstream process or a downstream process which is given a model evaluation that is based on the estimation model whose certainty is greater than the standard value. Also, when a model evaluation based on the complexity of the estimation model is used, the process evaluation unit 570 may determine to improve an upstream process or a downstream process which is given a model evaluation that is based on the estimation model whose complexity is less than the standard value.

In S670, when there is no process to be improved ("N" in the figure), the evaluation apparatus 110 causes the process to proceed S600 and continues to collect information such as acquiring a new association (S600). When there is a process to be improved in S670 ("Y" in the figure), in S680, the message output unit 580 outputs at least one improvement request message of the upstream process or the downstream process which is determined to be improved to the learning apparatus 100 provided in the process to be improved. Herein, when a specific downstream produced object is targeted for the improvement request, the message output unit 580 may send an improvement request message including a produced object of the target process used for the specific downstream produced object and a quality evaluation of the downstream produced object. Then the evaluation apparatus 110 causes the process to proceed S600.

According to the evaluation apparatus 110 shown above, for each process from each learning apparatus 100, an association between each produced object supplied from the upstream side and each produced object of the process is received and thereby a correspondence can be generated, the correspondence being between: the products of each process which includes the upstream process between which the produced object goes through one or more other processes until it approaches the downstream process; and the quality evaluation of the downstream produced object. Thereby, the evaluation apparatus 110 can identify the final quality evaluation of the downstream produced objects produced by using each produced object of each process, even if the process is not the direct upstream process with respect to the downstream process. Also, the evaluation apparatus 110 can identify the process to be improved without acquiring the production parameter of each process, by using the model evaluation received from each learning apparatus 100.

Fig. 7 shows one example of a correspondence between a produced object and a final produced object of each process. In the example of this figure, the raw material manufacturer 20j produces a produced object J0000001. Correspondingly, the learning apparatus 100j stores, in the production data storage unit 215, production data in which, with reference to Fig. 3, the "product lot ID" section is "J0000001", the "supply source lot ID" section and the "supply source ID" section are vacant, and the "production parameter" section is a value of the production parameter used for producing the produced object J0000001. Similarly, the raw material manufacturer 20k produces a produced object K0000001, and the raw material manufacturer 20l produces a produced object L0000001.

The material manufacturer 20g produces a produced object G0000001 by using the produced objects J0000001, K0000001, and L0000001 as raw materials. Correspondingly, the learning apparatus 100g stores production data having the "product lot ID" section as "G0000001" in Fig. 3, the "supply source lot ID" section "J0000001, K0000001, L0000001", and the "supply source ID" section as "J, K, L", the "production parameter" section as a value of the production parameter used for producing the produced object G0000001, to the production data storage unit 215. The material manufacturer 20h and the material manufacturer 20i also produce a produced object H0000001 and a produced object I0000001 by using the required raw materials, respectively.

The component manufacturer 20d produces a produced object D0000001 by using the produced objects G0000001, H0000001, and L0000001 as materials. Correspondingly, the learning apparatus 100d stores production data having the "product lot ID" section in Fig. 3 as "D0000001", the "supply source lot ID" section as "G0000001, H0000001, I0000001", the "supply source ID" section as "G, H, I", the "production parameter" section as a value of the production parameter used for producing the produced object D0000001, to the production data storage unit 215. The component manufacturer 20e and the component manufacturer 20f also produce a produced object E0000001 and a produced object F0000001 by using the required raw materials, respectively.

The product manufacturer 20a produces a produced object A0000001 by using the produced objects D0000001, E0000001, and F0000001 as components. Correspondingly, the product evaluation apparatus 105a stores production data having the "product lot ID" section in Fig. 3 as "A0000001", the "supply source lot ID" section as "D0000001, E0000001, F0000001", the "supply source ID" section as "D, E, F", the "production parameter" section as a value of the production parameter used for producing the produced object A0000001.

In the example of this figure, the learning apparatus 100g sends, to the evaluation apparatus 110, an association between the produced objects J0000001, K0000001 and L0000001 which are from the upstream side and the produced object G0000001 which is supplied to the downstream side. The learning apparatus 100d sends, to the evaluation apparatus 110, an association between the produced objects G0000001, H0000001, and I0000001 which are from the upstream side and the produced object D0000001 which is supplied to the downstream side. The product evaluation apparatus 105a sends, to the evaluation apparatus 110, an association between the produced objects D0000001, E0000001, and F0000001 from the upstream side and a quality evaluation of the produced object A0000001.

By receiving the association of the produced objects in each process from the learning apparatuses 100d-f and the product evaluation apparatus 105a, the correspondence generating unit 510 of the evaluation apparatus 110 generates a correspondence between the produced objects of each process and the quality evaluation of the produced object of the downstream process. In the example of this figure, the correspondence generating unit 510 determines that the quality evaluations of the produced object D0000001 and the produced object A0000001 are corresponding to each other, since there is an indication in the association which is received from the learning apparatus 100a that the produced object D0000001 is used for producing the produced object A0000001.

Also, the correspondence generating unit 510 determines that the quality evaluations of the produced object G0000001 and the produced object A0000001 are corresponding to each other, since there are an indication in the association which is received from the learning apparatus 100a that the produced object D0000001 is used for producing the produced object A0000001, and an indication in the association which is received from the learning apparatus 100d that the produced object G0000001 is used for producing the produced object D0000001.

In this manner, the correspondence generating unit 510 can further identify, with respect to the produced object D0000001 or the like which is used for producing the final produced object A0000001, the produced object G0000001 or the like which is more upstream and which is used for producing the produced object D0000001, and then further go back to the upstream, thereby generate a correspondence indicating that the produced objects D0000001-L0000001 in each upstream process are the produced objects used for producing the final produced object A0000001.

The correspondence generating unit 510 may generate a graph structure as shown in Fig. 7, which has each produced object included in the association between produced objects of each process as a node and the association between the produced objects as an edge. The correspondence generating unit 510 can then generate a correspondence that a produced object X is used for producing a final produced object Y, when there is a path which traces one or more edges from a node corresponding to the produced object X in a certain upstream process to approach a node corresponding the final produced object Y.

In addition to the function shown above, the evaluation apparatus 110 may include a function to detect whether the quality evaluation of the downstream produced object is increased or not, or the increased amount of the quality evaluation, in association with the improvement of at least one factor parameter according to the learning apparatus 100 which received an improvement request message. For example, the evaluation apparatus 110 may detect whether the quality evaluation is increased or not and the like by using an average or a yield of the quality evaluation of the downstream produced object or the like. Furthermore, the evaluation apparatus 110 may issue an incentive for the quality improvement of the downstream produced object involved in the improvement of the factor parameter, to an account of a computer used by the manufacturer 20 which is responsible for a process in which the improvement of the factor parameter is performed, by providing a point, a crypto asset or the like, for example, in response to: the quality evaluation of the downstream produced object increased relative to before the improvement; or the increased amount of the quality evaluation exceeding a threshold.

Also, the evaluation system 10 shown above is not only utilized for the quality improvement of the final produced object, but also can be utilized for a production cost reduction of the final produced object. When the evaluation system 10 is utilized for the production cost reduction of the final produced object, the process evaluation unit 570 of the evaluation apparatus 110 may determine that a process in which a model evaluation is less than a standard value should be improved. Thereby, the process evaluation unit 570 can determine that a process in which the production parameter does not have a significant effect on the quality of the final produced object is a process which has no problem even if the process is changed for the production cost reduction.

Correspondingly, the parameter selecting unit 260 of the learning apparatus 100 selects at least one production parameter which may be changed for the production cost reduction in response to the improvement request, among one or more production parameters in the target process. Conversely to the operation shown in S470 of Fig. 4, the parameter selecting unit 260 selects, among the one or more production parameters, a production parameter whose effect on the quality is less than a predetermined threshold as a changeable production parameter. The quality evaluation estimating unit 265 estimates how the quality evaluation of the downstream produced object produced in the downstream process by using each produced object of the target process changes and how much the production cost of the produced object of the target process can be reduced, when the production parameter selected as a changeable one is adjusted. The quality evaluation estimating unit 265 may change the production parameter selected as a changeable one so that a reduced amount of the quality evaluation of the downstream produced object is suppressed to be less than the threshold value, and the effect of the production cost reduction exceeds the threshold.

Various embodiments of the present invention may be described with reference to flowcharts and block diagrams whose blocks may represent (1) steps of processes in which manipulations are performed or (2) sections of apparatuses responsible for performing manipulations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical manipulations, flip-flops, registers, memory elements, etc., such as field-programmable gate arrays (FPGA), programmable logic arrays (PLA), etc.

Computer-readable media may include any tangible device that can store instructions for execution by a suitable device, such that the computer-readable medium having instructions stored therein comprises an article of manufacture including instructions which can be executed to create means for performing manipulations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy (registered trademark) disk, a diskette, a hard disk, a random access memory (RAM), a read-only memory (ROM), an erasable programmable read-only memory (EPROM or Flash memory (registered trademark)), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer-readable instructions may be provided to a processor or programmable circuitry of a programmable data processing apparatus such as a general-purpose computer, special purpose computer, or another computer, locally or via a local area network (LAN), wide area network (WAN) such as the Internet, to execute the computer-readable instructions to create means for performing operations specified in the flowcharts or block diagrams. Examples of processors include computer processors, processing units, microprocessors, digital signal processors, controllers, microcontrollers, etc.

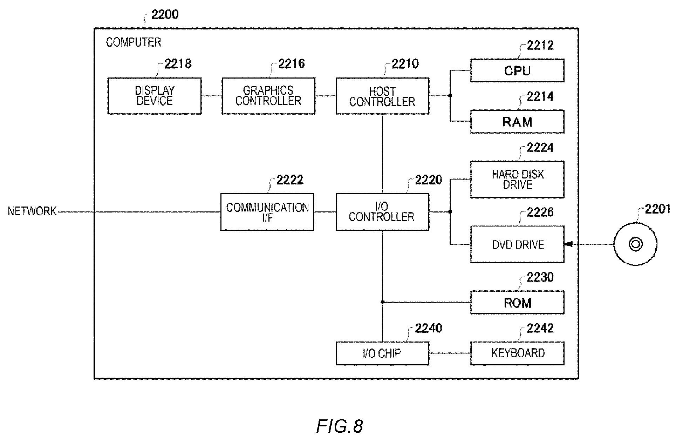

Fig. 8 shows an example of a computer 2200 in which a plurality of aspects of the present invention may be entirely or partially embodied. A program that is installed in the computer 2200 can cause the computer 2200 to function as or perform manipulations associated with apparatuses of the embodiments of the present invention or one or more sections thereof, and/or cause the computer 2200 to perform processes of the embodiments of the present invention or steps thereof. Such a program may be executed by the CPU 2212 to cause the computer 2200 to perform certain manipulations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, or the like to the input/output controller 2220.

A program is provided by computer readable media such as the DVD-ROM 2201 or the IC card. The program is read from the computer readable media, installed into the hard disk drive 2224, RAM 2214, or ROM 2230, which are also examples of computer readable media, and executed by the CPU 2212. The information processing described in these programs is read into the computer 2200, resulting in cooperation between a program and the above-mentioned various types of hardware resources. An apparatus or method may be constituted by realizing the manipulation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary part of a file or a database to be read into the RAM 2214, the file or the database having been stored in an external recording medium such as the hard disk drive 2224, the DVD-ROM drive 2226 (DVD-ROM 2201), the IC card, or the like, and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may execute various types of processes including various types of operations, information processing, conditional judgement, conditional branching, unconditional branching, and information retrieval/replacement described throughout the present disclosure and specified by command sequences of a program with respect to the data read from the RAM 2214, and the results are written back to RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on or near the computer 2200. In addition, a recording medium such as a hard disk or a RAM provided in a server system connected to a dedicated communication network or the Internet can be used as the computer readable media, thereby providing the program to the computer 2200 via the network.

deleted

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the operation flow is described using phrases such as "first" or "next" in the claims, embodiments, or diagrams, it does not necessarily mean that the process must be performed in this order.

### EXPLANATION OF REFERENCES

10 evaluation system
20a-l manufacturer
30 facility
100d-l learning apparatus
105a-c product evaluation apparatus
110 evaluation apparatus
210 production management unit
215 production data storage unit
220 association sending unit
225 correspondence receiving unit
235 learning processing unit
240 estimation model storage unit
245 calculating unit
250 model evaluation sending unit
255 improvement request receiving unit
260 parameter selecting unit
265 quality evaluation estimating unit
500 association acquiring unit
510 correspondence generating unit
520 correspondence data storage unit
530 correspondence sending unit
550 start determination unit
560 model evaluation receiving unit
570 process evaluation unit
580 message output unit
2200 computer
2201 DVD-ROM
2210 host controller
2212 CPU
2214 RAM
2216 graphics controller
2218 display device
2220 input/output controller
2222 communication interface
2224 hard disk drive
2226 DVD-ROM drive
2230 ROM
2240 input/output chip
2242 keyboard

## Claims

1. A system comprising:
at least two manufactures (20) forming a supply chain in which a learning apparatus (100) is provided in each of the at least two manufactures (20); and
an evaluation apparatus (110), each learning apparatus (100) comprises:
a correspondence receiving unit (225) configured to receive a correspondence between each produced object of a target process which is targeted and a quality evaluation of each downstream produced object produced in a downstream process by using each produced object of the target process;
a learning processing unit (235) configured to generate, through learning, an estimation model for outputting an estimation value of the quality evaluation of the downstream produced object from an input of at least one production parameter, by using, as learning data, a set consisting of input data for learning including the at least one production parameter about the production of each produced object of the target process and a label for learning including the quality evaluation of each downstream produced object produced by using each produced object of the target process, without reference to a production parameter related to processes other than the target process, the estimation model using a machine learning algorithm;
a calculating unit (245) configured to calculate, as a model evaluation, an indicator indicating at least one of certainty or complexity of the estimation model; and
a model evaluation sending unit (250) configured to send the model evaluation calculated by the calculating unit (245), to an evaluation apparatus (110) for evaluating at least one upstream process by using a model evaluation about each of the at least one upstream process which is upstream of the downstream process,
the evaluation apparatus (110) comprises:
a model evaluation receiving unit (560) configured to receive the model evaluation; and
a process evaluation unit (570) configured to evaluate the at least one upstream process based on the model evaluation about each of the at least one upstream process,
wherein each learning apparatus (100) further comprises:
an improvement request receiving unit (255) configured to receive an improvement request message which is sent by the evaluation apparatus (110) in response to determining that the target process should be improved based on the model evaluation about each of the at least one upstream process; and
a parameter selecting unit (260) configured to select a production parameter to be adjusted among the at least one production parameter in the target process, in response to a reception of the improvement request message.

2. The system according to claim 1, wherein each learning apparatus (100) further comprises a quality evaluation estimating unit (265) configured to estimate a quality evaluation of the downstream produced object produced in the downstream process by using each produced object of the target process in a case of adjusting a production parameter selected by the parameter selecting unit (260).

3. The system according to claim 1, wherein the process evaluation unit (570) is configured to determine to improve an upstream process, among the at least one upstream process, which is given a model evaluation that is based on the estimation model whose certainty is greater than a standard value or whose complexity is less than a standard value.

4. The system according to claim 3, wherein the evaluation apparatus (110) further comprises a message output unit (580) configured to output an improvement request message for the upstream process determined to be improved.

5. The system according to any one of claims 1, 3 and 4, wherein the evaluation apparatus (110) further comprises:
an association acquiring unit (500) configured to acquire, for each process of the at least one upstream process, an association between each produced object supplied from a process on the upstream side and each produced object of the process which is supplied to the downstream side;
a correspondence generating unit (510) configured to generate a correspondence between each produced object of the at least one upstream process and the quality evaluation of each downstream produced object by using each association acquired by the association acquiring unit (500); and
a correspondence sending unit (530) configured to send the correspondence to each learning apparatus (100).

6. The system according to any one of claims 1 and 3-5, wherein the evaluation apparatus (110) further comprises a start determination unit (550) configured to determine whether to start an evaluation of the at least one upstream process by the process evaluation unit (570), based on a quality evaluation of at least one downstream produced object.

7. A method performed by a system comprising:
at least two manufactures (20) forming a supply chain in which a learning apparatus (100) is provided in each of the at least two manufactures (20); and
an evaluation apparatus (110),
the method comprises
a learning method comprising:
receiving, by each learning apparatus (100), a correspondence between each produced object of a target process which is targeted and a quality evaluation of each downstream produced object produced in a downstream process by using each produced object of the target process;
generating, by each learning apparatus (100), through learning, an estimation model for outputting an estimation value of the quality evaluation of the downstream produced object from an input of at least one production parameter, by using, as learning data, a set consisting of input data for learning including the at least one production parameter about the production of each produced object of the target process and a label for learning including the quality evaluation of each downstream produced object produced by using each produced object of the target process, without reference to a production parameter related to processes other than the target process, the estimation model using a machine learning algorithm;
calculating, by each learning apparatus (100), as a model evaluation, an indicator indicating at least one of certainty or complexity of the estimation model; and
sending, by each learning apparatus (100), the calculated model evaluation, to an evaluation apparatus (110) for evaluating at least one upstream process by using a model evaluation about each of the at least one upstream process which is upstream of the downstream process, and
an evaluation method comprising:
receiving, by the evaluation apparatus (110), the model evaluation; and
evaluating, by the evaluation apparatus (110), the at least one upstream process based on the model evaluation about each of the at least one upstream process;
wherein the learning method further comprises:
receiving, by each learning apparatus (100) an improvement request message which is sent by the evaluation apparatus (110) in response to determining that the target process should be improved based on the model evaluation about each of the at least one upstream process; and
selecting, by each learning apparatus (100), a production parameter to be adjusted among the at least one production parameter in the target process, in response to a reception of the improvement request message.

8. A program comprising instructions which, when the program is executed by at least one computer of a system comprising:
at least two manufactures (20) forming a supply chain in which a learning apparatus (100) is provided in each of the at least two manufactures (20); and
an evaluation apparatus (110),
cause the at least one computer to carry out, by each learning apparatus (100), steps of:
receiving a correspondence between each produced object of a target process which is targeted and a quality evaluation of each downstream produced object produced in a downstream process by using each produced object of the target process;
generating, through learning, an estimation model for outputting an estimation value of the quality evaluation of the downstream produced object from an input of at least one production parameter, by using , as learning data, a set consisting of input data for learning including the at least one production parameter about the production of each produced object of the target process and a label for learning including the quality evaluation of each downstream produced object produced by using each produced object of the target process, without reference to a production parameter related to processes other than the target process, the estimation model using a machine learning algorithm;
calculating, as a model evaluation, an indicator indicating at least one of certainty or complexity of the estimation model;
sending the calculated model evaluation to an evaluation apparatus (110) for evaluating at least one upstream process by using a model evaluation about each of the at least one upstream process which is upstream of the downstream process;
receiving an improvement request message which is sent by the evaluation apparatus (110) in response to determining that the target process should be improved based on the model evaluation about each of the at least one upstream process; and
selecting a production parameter to be adjusted among the at least one production parameter in the target process, in response to a reception of the improvement request message, and the instructions further
cause the at least one computer to carry out, by the evaluation apparatus (110), steps of:
receiving the model evaluation; and
evaluating the at least one upstream process based on the model evaluation about each of the at least one upstream process.

9. A computer readable medium storing the program according to claim 8.

## Patentansprüche

1. System, umfassend:
mindestens zwei Fabrikationen (20), die eine Lieferkette bilden, in der in jeder der mindestens zwei Fabrikationen (20) eine Lernvorrichtung (100) bereitgestellt ist; und
eine Auswertungsvorrichtung (110),
wobei jede Lernvorrichtung (100) umfasst:
eine Korrespondenzempfangseinheit (225), die dazu konfiguriert ist, eine Korrespondenz zwischen jedem produzierten Objekt eines Zielprozesses, auf den abgezielt wird, und einer Qualitätsauswertung jedes stromabwärts produzierten Objekts, das in einem stromabwärtigen Prozess durch Verwenden jedes produzierten Objekts des Zielprozesses produziert wird, zu empfangen;
eine lernende Verarbeitungseinheit (235), die dazu konfiguriert ist, durch Lernen ein Schätzungsmodell zum Ausgeben eines Schätzwerts der Qualitätsauswertung des stromabwärts produzierten Objekts aus einer Eingabe von mindestens einem Produktionsparameter durch Verwenden eines Satzes zu erzeugen, der aus Eingabedaten zum Lernen besteht, einschließlich des mindestens einen Produktionsparameters über die Produktion jedes produzierten Objekts des Zielprozesses und einer Kennzeichnung zum Lernen, einschließlich der Qualitätsauswertung jedes stromabwärts produzierten Objekts, das durch Verwenden jedes produzierten Objekts des Zielprozesses produziert wurde, ohne Bezugnahme auf einen Produktionsparameter, der sich auf andere Prozesse als den Zielprozess bezieht, wobei das Schätzungsmodell einen Maschinenlernalgorithmus verwendet;
eine Berechnungseinheit (245), die dazu konfiguriert ist, als Modellauswertung einen Indikator zu berechnen, der mindestens eines von Sicherheit oder Komplexität des Schätzungsmodells angibt; und
eine Modellauswertung-Sendeeinheit (250), die dazu konfiguriert ist, die durch die Berechnungseinheit (245) berechnete Modellauswertung an eine Auswertungsvorrichtung (110) zum Auswerten mindestens eines stromaufwärtigen Prozess durch Verwenden einer Modellauswertung über jeden des mindestens einen stromaufwärtigen Prozesses zu senden, der sich stromaufwärts des stromabwärtigen Prozesses befindet,
wobei die Auswertungsvorrichtung (110) umfasst:
eine Modellauswertung-Empfangseinheit (560), die dazu konfiguriert ist, die Modellauswertung zu empfangen; und
eine Prozessauswertungseinheit (570), die dazu konfiguriert ist, den mindestens einen stromaufwärtigen Prozess basierend auf der Modellauswertung über jeden des mindestens einen stromaufwärtigen Prozesses auszuwerten,
wobei jede Lernvorrichtung (100) weiter umfasst:
eine Verbesserungsanforderung-Empfangseinheit (255), die dazu konfiguriert ist, eine Verbesserungsanforderungsnachricht zu empfangen, die durch die Auswertungsvorrichtung (110) als Reaktion auf das Bestimmen, dass der Zielprozess basierend auf der Modellauswertung über jeden des mindestens einen stromaufwärtigen Prozesses verbessert werden sollte, gesendet wird; und
eine Parameterauswahleinheit (260), die dazu konfiguriert ist, als Reaktion auf einen Empfang der Verbesserungsanforderungsnachricht einen einzustellenden Produktionsparameter unter dem mindestens einen Produktionsparameter in dem Zielprozess auszuwählen.

2. System nach Anspruch 1, wobei jede Lernvorrichtung (100) weiter eine Qualitätsauswertung-Schätzeinheit (265) umfasst, die dazu konfiguriert ist, eine Qualitätsauswertung des stromabwärts produzierten Objekts, das in dem stromabwärtigen Prozess durch Verwenden jedes produzierten Objekts des Zielprozesses produziert wird, in einem Fall eines Einstellens eines Produktionsparameters, der durch die Parameterauswahleinheit (260) ausgewählt wird, zu schätzen.

3. System nach Anspruch 1, wobei die Prozessauswertungseinheit (570) dazu konfiguriert ist, zu bestimmen, unter dem mindestens einen stromaufwärtigen Prozess einen stromaufwärtigen Prozess zu verbessern, dem eine Modellauswertung gegeben wird, die auf dem Schätzungsmodell basiert, dessen Gewissheit größer als ein Standardwert ist oder dessen Komplexität kleiner als ein Standardwert ist.

4. System nach Anspruch 3, wobei die Auswertungsvorrichtung (110) weiter eine Nachrichtenausgabeeinheit (580) umfasst, die dazu konfiguriert ist, eine Verbesserungsanforderungsnachricht für den zu verbessernden stromaufwärtigen Prozess auszugeben.

5. System nach einem der Ansprüche 1, 3 und 4, wobei die Auswertungsvorrichtung (110) weiter umfasst:
eine Zuordnungserfassungseinheit (500), die dazu konfiguriert ist, für jeden Prozess des mindestens einen stromaufwärtigen Prozesses eine Zuordnung zwischen jedem produzierten Objekt, das von einem Prozess auf der stromaufwärtigen Seite geliefert wird, und jedem produzierten Objekt des Prozesses, das an die stromabwärtige Seite geliefert wird, zu erfassen;
eine Korrespondenzerzeugungseinheit (510), die dazu konfiguriert ist, eine Korrespondenz zwischen jedem produzierten Objekt des mindestens einen stromaufwärtigen Prozesses und der Qualitätsauswertung jedes stromabwärts produzierten Objekts unter Verwendung jeder durch die Zuordnungserfassungseinheit (500) erfassten Zuordnung zu erzeugen; und
eine Korrespondenzsendeeinheit (530), die dazu konfiguriert ist, die Korrespondenz an jede Lernvorrichtung (100) zu senden.

6. System nach einem der Ansprüche 1 und 3-5, wobei die Auswertungsvorrichtung (110) weiter eine Startbestimmungseinheit (550) umfasst, die dazu konfiguriert ist, basierend auf einer Qualitätsauswertung mindestens eines stromabwärts produzierten Objekts zu bestimmen, ob eine Auswertung des mindestens einen stromaufwärtigen Prozesses durch die Prozessauswertungseinheit (570) zu starten ist.

7. Verfahren, das durch ein System durchgeführt wird, umfassend:
mindestens zwei Fabrikationen (20), die eine Lieferkette bilden, in der in jeder der mindestens zwei Fabrikationen (20) eine Lernvorrichtung (100) bereitgestellt ist; und
eine Auswertungsvorrichtung (110),
das Verfahren umfassend
ein Lernverfahren, umfassend:
Empfangen einer Korrespondenz zwischen jedem produzierten Objekt eines Zielprozesses, auf den abgezielt wird, und einer Qualitätsauswertung jedes stromabwärts produzierten Objekts, das in einem stromabwärtigen Prozess durch Verwenden jedes produzierten Objekts des Zielprozesses produziert wird, durch jede Lernvorrichtung (100);
Erzeugen eines Schätzungsmodells durch jede Lernvorrichtung (100) durch Lernen zum Ausgeben eines Schätzwerts der Qualitätsauswertung des stromabwärts produzierten Objekts aus einer Eingabe von mindestens einem Produktionsparameter durch Verwenden eines Satzes, der aus Eingabedaten zum Lernen besteht, einschließlich des mindestens einen Produktionsparameters über die Produktion jedes produzierten Objekts des Zielprozesses und einer Kennzeichnung zum Lernen, einschließlich der Qualitätsauswertung jedes stromabwärts produzierten Objekts, das durch Verwenden jedes produzierten Objekts des Zielprozesses produziert wurde, ohne Bezugnahme auf einen Produktionsparameter, der sich auf andere Prozesse als den Zielprozess bezieht, wobei das Schätzungsmodell einen Maschinenlernalgorithmus verwendet;
Berechnen eines Indikators als Modellauswertung durch jede Lernvorrichtung (100), der mindestens eines von Sicherheit oder Komplexität des Schätzungsmodells anzeigt; und
Senden der berechneten Modellauswertung durch jede Lernvorrichtung (100) an eine Auswertungsvorrichtung (110) zum Auswerten mindestens eines stromaufwärtigen Prozesses durch Verwenden einer Modellauswertung über jeden des mindestens einen stromaufwärtigen Prozesses, der sich stromaufwärts des stromabwärtigen Prozesses befindet, und
ein Auswertungsverfahren, umfassend:
Empfangen der Modellauswertung durch die Auswertungsvorrichtung (110); und
Auswerten des mindestens einen stromaufwärtigen Prozesses durch die Auswertungsvorrichtung (110) basierend auf der Modellauswertung über jeden des mindestens einen stromaufwärtigen Prozesses;
wobei das Lernverfahren weiter umfasst:
Empfangen einer Verbesserungsanforderungsnachricht durch jede Lernvorrichtung (100), die durch die Auswertungsvorrichtung (110) als Reaktion auf das Bestimmen, dass der Zielprozess basierend auf der Modellauswertung über jeden des mindestens einen stromaufwärtigen Prozesses verbessert werden sollte, gesendet wird; und
Auswählen eines Produktionsparameters durch jede Lernvorrichtung (100), der unter dem mindestens einen Produktionsparameter in dem Zielprozess einzustellen ist, als Reaktion auf einen Empfang der Verbesserungsanforderungsnachricht.

8. Programm, das Anweisungen umfasst, die, wenn das Programm durch mindestens einen Computer eines Systems ausgeführt wird, das Folgendes umfasst:
mindestens zwei Fabrikationen (20), die eine Lieferkette bilden, in der in jeder der mindestens zwei Fabrikationen (20) eine Lernvorrichtung (100) bereitgestellt ist; und
eine Auswertungsvorrichtung (110),
den mindestens einen Computer veranlassen, durch jede Lernvorrichtung (100) Schritte auszuführen von:
Empfangen einer Korrespondenz zwischen jedem produzierten Objekt eines Zielprozesses, auf den abgezielt wird, und einer Qualitätsauswertung jedes stromabwärts produzierten Objekts, das in einem stromabwärtigen Prozess durch Verwenden jedes produzierten Objekts des Zielprozesses produziert wird;
Erzeugen eines Schätzungsmodells durch Lernen zum Ausgeben eines Schätzwerts der Qualitätsauswertung des stromabwärts produzierten Objekts aus einer Eingabe von mindestens einem Produktionsparameter durch Verwenden eines Satzes, der aus Eingabedaten zum Lernen besteht, einschließlich des mindestens einen Produktionsparameters über die Produktion jedes produzierten Objekts des Zielprozesses und einer Kennzeichnung zum Lernen, einschließlich der Qualitätsauswertung jedes stromabwärts produzierten Objekts, das durch Verwenden jedes produzierten Objekts des Zielprozesses produziert wurde, ohne Bezugnahme auf einen Produktionsparameter, der sich auf andere Prozesse als den Zielprozess bezieht, wobei das Schätzungsmodell einen Maschinenlernalgorithmus verwendet;
Berechnen eines Indikators als Modellauswertung, der mindestens eines von Sicherheit oder Komplexität des Schätzungsmodells angibt;
Senden der berechneten Modellauswertung an eine Auswertungsvorrichtung (110) zum Auswerten mindestens eines stromaufwärtigen Prozesses durch Verwenden einer Modellauswertung über jeden des mindestens einen stromaufwärtigen Prozesses, der sich stromaufwärtig des stromabwärtigen Prozesses befindet;
Empfangen einer Verbesserungsanforderungsnachricht, die durch die Auswertungsvorrichtung (110) als Reaktion auf das Bestimmen, dass der Zielprozess basierend auf der Modellauswertung über jeden der mindestens einen stromaufwärtigen Prozesses verbessert werden sollte, gesendet wird; und
Auswählen eines Produktionsparameters, der unter dem mindestens einen Produktionsparameter in dem Zielprozess einzustellen ist, als Reaktion auf einen Empfang der Verbesserungsanforderungsnachricht und wobei die Anweisungen weiter den mindestens einen Computer veranlassen, durch die Auswertungsvorrichtung (110) Schritte auszuführen von:
Empfangen der Modellauswertung; und
Auswerten des mindestens einen stromaufwärtigen Prozesses basierend auf der Modellauswertung über jeden des mindestens einen stromaufwärtigen Prozesses.

9. Computerlesbares Medium, das das Programm nach Anspruch 8 speichert.

## Revendications

1. Système comprenant :
au moins deux manufactures (20) formant une chaîne d'approvisionnement dans laquelle un appareil d'apprentissage (100) est disposé dans chacune des au moins deux manufactures (20) ; et
un appareil d'évaluation (110),
chaque appareil d'apprentissage (100) comprenant :
une unité (225) de réception de correspondance configurée pour recevoir une correspondance entre chaque objet produit d'un processus cible qui est ciblé et une évaluation de qualité de chaque objet produit en aval qui est produit dans un processus aval en utilisant chaque objet produit du processus cible ;
une unité (235) de traitement d'apprentissage configurée pour générer, par apprentissage, un modèle d'estimation pour délivrer en sortie une valeur d'estimation de l'évaluation de qualité de l'objet produit en aval à partir d'une entrée d'au moins un paramètre de production, en utilisant, en tant que données d'apprentissage, un ensemble constitué de données d'entrée d'apprentissage, comportant ledit au moins un paramètre de production concernant la production de chaque objet produit du processus cible et une étiquette d'apprentissage comportant l'évaluation de qualité de chaque objet produit en aval qui est produit en utilisant chaque objet produit du processus cible, sans référence à un paramètre de production lié à des processus autres que le processus cible, le modèle d'estimation utilisant un algorithme d'apprentissage automatique ;
une unité de calcul (245), configurée pour calculer, en tant qu'évaluation de modèle, un indicateur indiquant au moins l'une parmi une certitude ou une complexité du modèle d'estimation ; et
une unité (250) d'envoi d'évaluation de modèle, configurée pour envoyer l'évaluation de modèle calculée par l'unité de calcul (245), à un appareil d'évaluation (110) pour évaluer au moins un processus amont en utilisant une évaluation de modèle concernant chaque processus dudit au moins un processus amont, qui est en amont du processus aval, l'appareil d'évaluation (110) comprenant :
une unité (560) de réception d'évaluation de modèle configurée pour recevoir l'évaluation de modèle ; et
une unité (570) d'évaluation de processus configurée pour évaluer ledit au moins un processus amont sur la base de l'évaluation de modèle concernant chaque processus dudit au moins un processus amont,
chaque appareil d'apprentissage (100) comprenant en outre :
une unité (255) de réception de demande d'amélioration configurée pour recevoir un message de demande d'amélioration qui est envoyé par l'appareil d'évaluation (110) en réponse à la détermination du fait que le processus cible doit être amélioré sur la base de l'évaluation de modèle concernant chacun de l'au moins un processus amont ; et
une unité (260) de sélection de paramètre configurée pour sélectionner un paramètre de production à ajuster parmi ledit au moins un paramètre de production dans le processus cible, en réponse à une réception du message de demande d'amélioration.

2. Système selon la revendication 1, dans lequel chaque appareil d'apprentissage (100) comprend en outre une unité (265) d'estimation d'évaluation de qualité configurée pour estimer une évaluation de qualité de l'objet produit en aval qui est produit dans le processus aval en utilisant chaque objet produit du processus cible dans un cas d'ajustement d'un paramètre de production sélectionné par l'unité (260) de sélection de paramètre.

3. Système selon la revendication 1, dans lequel l'unité (570) d'évaluation de processus est configurée pour déterminer qu'il faut améliorer un processus amont, parmi ledit au moins un processus amont, recevant une évaluation de modèle qui est basée sur le modèle d'estimation dont la certitude est supérieure à une valeur standard ou dont la complexité est inférieure à une valeur standard.

4. Système selon la revendication 3, dans lequel l'appareil d'évaluation (110) comprend en outre une unité (580) de sortie de message configurée pour délivrer en sortie un message de demande d'amélioration pour le processus amont déterminé comme devant être amélioré.

5. Système selon l'une quelconque des revendications 1, 3 et 4, dans lequel l'appareil (110) d'apprentissage comprend en outre :
une unité (500) d'acquisition d'association configurée pour acquérir, pour chaque processus dudit au moins un processus amont, une association entre chaque objet produit fourni par un processus du côté amont et chaque objet produit du processus qui est fourni au côté aval ;
une unité (510) de génération de correspondance configurée pour générer une correspondance entre chaque objet produit dudit au moins un processus amont et l'évaluation de qualité de chaque objet produit en aval en utilisant chaque association acquise par l'unité (500) d'acquisition d'association ; et
une unité (530) d'envoi de correspondance configurée pour envoyer la correspondance à chaque appareil d'apprentissage (100).

6. Système selon l'une quelconque des revendications 1 et 3 à 5, dans lequel l'appareil d'évaluation (110) comprend en outre une unité (550) de détermination de démarrage configurée pour déterminer s'il faut démarrer une évaluation dudit au moins un processus amont au moyen de l'unité (570) d'évaluation de processus, sur la base d'une évaluation de qualité d'au moins un objet produit en aval.

7. Procédé mis en œuvre par un système comprenant :
au moins deux manufactures (20) formant une chaîne d'approvisionnement dans laquelle un appareil d'apprentissage (100) est disposé dans chacune desdites au moins deux manufactures (20) ; et
un appareil d'évaluation (110),
le procédé comprenant
un procédé d'apprentissage comprenant :
la réception, par chaque appareil d'apprentissage (100), d'une correspondance entre chaque objet produit d'un processus cible qui est ciblé et une évaluation de qualité de chaque objet produit en aval qui est produit dans un processus aval en utilisant chaque objet produit du processus cible ;
la génération, par chaque appareil d'apprentissage (100), par apprentissage, d'un modèle d'estimation pour délivrer en sortie une valeur d'estimation de l'évaluation de qualité de l'objet produit en aval à partir d'une entrée d'au moins un paramètre de production, en utilisant, en tant que données d'apprentissage, un ensemble constitué de données d'entrée d'apprentissage comportant
ledit au moins un paramètre de production concernant la production de chaque objet produit du processus cible et une étiquette d'apprentissage comportant l'évaluation de qualité de chaque objet produit en aval qui est produit en utilisant chaque objet produit du processus cible, sans référence à un paramètre de production lié à des processus autres que le processus cible, le modèle d'estimation utilisant un algorithme d'apprentissage automatique ;
le calcul, par chaque appareil d'apprentissage (100), en tant qu'évaluation de modèle, d'un indicateur indiquant au moins une parmi une certitude ou une complexité du modèle d'estimation ; et
l'envoi, par chaque appareil d'apprentissage (100), de l'évaluation de modèle calculée, à un appareil d'évaluation (110) pour évaluer au moins un processus amont en utilisant une évaluation de modèle concernant chaque processus parmi ledit au moins un processus amont qui est en amont du processus aval, et
un procédé d'évaluation comprenant :
la réception, par l'appareil d'évaluation (110), de l'évaluation de modèle ; et
l'évaluation, par l'appareil d'évaluation (110), dudit au moins un processus amont sur la base de l'évaluation de modèle concernant chaque processus parmi ledit au moins un processus amont ;
le procédé d'apprentissage comprenant en outre :
la réception, par chaque appareil d'apprentissage (100), d'un message de demande d'amélioration qui est envoyé par l'appareil d'évaluation (110) en réponse à la détermination du fait que le processus cible doit être amélioré sur la base de l'évaluation de modèle concernant chaque processus parmi ledit au moins un processus amont ; et
la sélection, par chaque appareil d'apprentissage (100), d'un paramètre de production à ajuster parmi ledit au moins un paramètre de production dans le processus cible, en réponse à une réception du message de demande d'amélioration.

8. Programme comprenant des instructions qui, lorsque le programme est exécuté par au moins un ordinateur d'un système comprenant :
au moins deux manufactures (20) formant une chaîne d'approvisionnement dans laquelle un appareil d'apprentissage (100) est disposé dans chacune desdites au moins deux manufactures (20) ; et
un appareil d'évaluation (110),
amènent ledit au moins un ordinateur à mettre en œuvre, au moyen de chaque appareil d'apprentissage (100), les étapes suivantes :
la réception d'une correspondance entre chaque objet produit d'un processus cible qui est ciblé et une évaluation de qualité de chaque objet produit en aval qui est produit dans un processus aval en utilisant chaque objet produit du processus cible ;
la génération, par apprentissage, d'un modèle d'estimation pour délivrer en sortie une valeur d'estimation de l'évaluation de qualité de l'objet produit en aval à partir d'une entrée d'au moins un paramètre de production, en utilisant, en tant que données d'apprentissage, un ensemble constitué de données d'entrée d'apprentissage comportant ledit au moins un paramètre de production concernant la production de chaque objet produit du processus cible et une étiquette d'apprentissage comportant l'évaluation de qualité de chaque objet produit en aval qui est produit en utilisant chaque objet produit du processus cible, sans référence à un paramètre de production lié à des processus autres que le processus cible, le modèle d'estimation utilisant un algorithme d'apprentissage automatique ;
le calcul, en tant qu'évaluation de modèle, d'un indicateur indiquant au moins une parmi une certitude ou une complexité du modèle d'estimation ;
l'envoi de l'évaluation de modèle calculée, à un appareil d'évaluation (110) pour évaluer au moins un processus amont en utilisant une évaluation de modèle concernant chaque processus parmi ledit au moins un processus amont qui est en amont du processus aval ;
la réception d'un message de demande d'amélioration qui est envoyé par l'appareil d'évaluation (110) en réponse à la détermination du fait que le processus cible doit être amélioré sur la base de l'évaluation de modèle concernant chaque processus parmi ledit au moins un processus amont ; et
la sélection d'un paramètre de production à ajuster parmi ledit au moins un paramètre de production dans le processus cible, en réponse à une réception du message de demande d'amélioration, et les instructions amènent en outre ledit au moins un ordinateur à mettre en œuvre, au moyen de l'appareil d'évaluation (110), les étapes suivantes :
la réception, de l'évaluation de modèle ; et
l'évaluation dudit au moins un processus amont sur la base de l'évaluation de modèle concernant chaque processus parmi ledit au moins un processus amont.

9. Support lisible par ordinateur stockant le programme selon la revendication 8.
